(19) **Europäisches Patentamt European Patent Office Office européen des brevets**

(11) **EP 1 128 961 B1**

(12) **EUROPEAN PATENT SPECIFICATION**

(45) Date of publication and mention
of the grant of the patent:
**29.04.2009 Bulletin 2009/18**

(51) Int Cl.:
***H04N 1/387*** ***(2006.01)***

(21) Application number: **99957714.1**

(86) International application number:
**PCT/AU1999/000984**

(22) Date of filing: **09.11.1999**

(87) International publication number:
**WO 2000/027640 (18.05.2000 Gazette 2000/20)**

(54) **PRINTER DRIVER AND METHODS OF OPERATION**

DRUCKERTREIBER UND BETRIEBSVERFAHREN

PILOTE D'IMPRIMANTE ET PROCEDES DE FONCTIONNEMENT

(84) Designated Contracting States:
**AT BE CH CY DE DK ES FI FR GB GR IE IT LI LU MC NL PT SE**

(30) Priority: **09.11.1998 AU PP702498**
**09.11.1998 AU PP702598**

(43) Date of publication of application:
**05.09.2001 Bulletin 2001/36**

(73) Proprietor: **Silverbrook Research Pty. Limited Balmain, NSW 2041 (AU)**

(72) Inventors:
• **SILVERBROOK, Kia**
**Balmain, NSW 2041 (AU)**
• **LAPSTUN, Paul**
**Balmain, NSW 2041 (AU)**
• **WALMSLEY, Simon, Robert**
**Balmain, NSW 2041 (AU)**

(74) Representative: **Moore, Barry et al**
**Hanna Moore & Curley**
**13 Lower Lad Lane**
**Dublin 2 (IE)**

(56) References cited:
**EP-A2- 0 262 801          WO-A-95/35623**
**FR-A1- 2 716 593          US-A- 5 774 634**

• **'None'**

## Description

TECHNICAL FIELD

The invention concerns a printer driver for a high performance color printer, such as a printer using a page-width drop-on-demand inkjet printhead. In another aspect it concerns a method of printing.

WO-A-95/35623 relates to a printer driver. The printer driver manages a two-layer buffer which represents a page to be printed. The first layer of the buffer contains background contone data. The second layer of the buffer contains foreground bi-level data. The printer driver transmits data from the buffer to the printer and the printer composits data from the layers of the buffer.

US-5774634 discusses a printer driver rendering PDL data into a high resolution bi-level memory and a gradation memory before compositing the data in the two buffers for printing. Data is removed from the bi-level memory when obscured by data from the gradation memory.

SUMMARY OF THE INVENTION

The invention is a printer driver for a high performance printer, where the printer driver manages a two layer page buffer representing a page to be printed. The first layer of the buffer contains background contone data, while the second layer contains foreground bi-level data. The printer driver transmits the buffer to the printer on completion of the page, and the printer composits the two layers after halftoning the contone layer. The printer driver operates such that when it determines that contone data being composited with the contone layer obscures data in the bi-level layer, the obscured bi-level data is removed from the bi-level layer and either discarded, or in the case where there is some interaction between the image represented by the obscuring contone data and the image represented by the obscured bi-level data then the obscured bi-level data is composited with the contone layer before the obscuring contone data is composited with the contone layer.

The contone data may have a lower resolution than the bi-level data.

The two layer page buffer may be augmented with a third layer of contone data, where the third layer contains a contone version of the bi-level data of the second layer subsampled at the resolution of the first layer, and where the printer driver operates such that when it determines that contone data being composited with the first layer obscures contone data in the third layer, the obscured contone data is removed from the third layer and is composited with the contone layer before the obscuring contone data is composited with the contone layer, and the bi-level data in the second layer which corresponds to the obscured contone data in the third layer is removed from the second layer

Interaction will typically occur between an image represented by the obscuring contone data and obscured bi-level data where the contone data represents a non-opaque image object.

The contone data will typically be color data, whereas the bi-level data will usually be black data; although it might be another color. Additional layers may be provided to accommodate additional foreground bi-level layers of additional colors.

The printer driver will usually be closely coupled with a host graphics system, so that the printer driver can provide device-specific handling for different graphics and imaging operations, in particular compositing operations and text operations.

The host will provide support for color management, so that device-independent color can be converted to printer-specific color in a standard way. The page description sent to the printer generally contains *device-specific* color.

The host graphics system renders images and graphics to a nominal resolution specified by the printer driver, but it allows the printer driver to take control of rendering text. In particular, the graphics system provides sufficient information to the printer driver to allow it to *render and position* text at a higher resolution than the nominal device resolution.

The host graphics system requires random access to a contone page buffer at the nominal device resolution, into which it composites graphics and imaging objects, but that it allows the printer driver to take control of the actual compositing in that it expects the printer driver to *manage* the page buffer.

The printer's page description may contains a 267 ppi contone layer and an 800 dpi black layer. The printer driver may specify a nominal page resolution of 267 ppi to the graphics system. Where possible the printer driver relies on the graphics system to render image and graphics objects to the pixel level at 267 ppi, with the exception of *black* text. The printer driver fields all text rendering requests, detects and renders black text at 800 dpi, but returns non-black text rendering requests to the graphics system for rendering at 267 ppi.

The following rules may be implemented by the printer driver:

When a black object is composited with the page buffer it is composited with the bi-level black layer. The black layer is updated by simply *or*ing the object opacity with the black layer opacity, and the corresponding part of the medium-resolution contone black layer is re-computed from the high-resolution black layer.

When a contone color object is composited with the page buffer it is composited with the contone layer. The contone layer and the black layer are updated as follows:

Wherever the contone object obscures the black layer, even if not fully opaquely, the affected black layer pixels are *pushed* from the black layer to the contone layer, i.e. composited with the contone layer and removed from the black layer. The contone object is then composited with the contone layer.

If a contone object pixel is fully opaque, then there is no need to push the corresponding black pixels into the background contone layer, since the background contone pixel will subsequently be completely obliterated by the foreground contone pixel.

The bi-level black layer data may be transmitted to the printer in compressed form. Group 4 facsimile coding may be used for this purpose, but it is better if the modified Huffman coding of horizontal run lengths is removed, or tuned for higher resolutions. Alternatively EDRL compression may be used.

The contone layer data may also be transmitted to the printer in compressed form. JPEG or wavelet compression may be used for this purpose.

Figure 1 is a series of diagrams showing the compositing of a black object onto a white image.

Figure 2 is a series of diagrams showing the compositing of a contone object onto a white image.

Figure 3 is a series of diagrams showing the compositing of a black object onto an image containing a contone object.

Figure 4 is a series of diagrams showing the compositing of an opaque contone object onto an image containing a black object.

Figure 5 is a series of diagrams showing the compositing of a transparent contone object onto an image containing a black object.

Figure 6 is a block diagram of the Windows 9x/NT printing system with printer driver components.

DESCRIPTION OF PREFERRED AND OTHER EMBODIMENTS

## 1 Introduction

The invention will be described with reference to a high-performance color printer which combines photographic-quality image reproduction with magazine-quality text reproduction. The printer utilizes an 8" page-width drop-on-demand microelectromechanical inkjet ("Memjet") printhead which produces 1600 dots per inch (dpi) bi-level CMYK (Cyan, Magenta, Yellow, blacK). It prints 30 full-color A4 or Letter pages per minute, and is intended as an entry-level desktop printer. The printer has been designated as iPrint and will be referred to by that name in the following description.

### 1.1 Operational Overview

iPrint reproduces black text and graphics directly using bi-level black, and continuous-tone (contone) images and graphics using dithered bi-level CMYK. For practical purposes, iPrint supports a black resolution of 800 dpi, and a contone resolution of 267 pixels per inch (ppi).

iPrint is, in use, attached to a workstation or personal computer (PC) via a relatively low-speed (1.5MBytes/s) universal serial bus (USB) connection [14]. iPrint relies on the PC to render each page to the level of contone pixels and black dots. The PC compresses each rendered page to less than 3MB for sub-two-second delivery to the printer. iPrint decompresses and prints the page line by line at the speed of the Memjet printhead. iPrint contains sufficient buffer memory for two compressed pages (6MB), allowing it to print one page while receiving the next, but does not contain sufficient buffer memory for even a single uncompressed page (119MB).

### 1.2 Page Width

The standard Memjet nozzle layout has a half-inch unit cell, and so can be trivially adapted to page widths which are multiples of half an inch. Arbitrary page widths can be achieved with custom nozzle layouts, in markets which justify such specialisation. The initial Memjet building block is a widely useful four-inch printhead which makes efficient use of a six-inch silicon wafer. The iPrint design therefore assumes an eight-inch Memjet printhead, made up of two four-inch printheads joined together. The use of a wider printhead to achieve full bleed on A4/Letter pages only affects a few aspects of the iPrint design - specifically the exact mechanical design, and the logic of the printhead interface.

## 2 Memjet-Based Printing

A Memjet printhead produces 1600 dpi bi-level CMYK. On low-diffusion paper, each ejected drop forms an almost perfectly circular 22.5 micron diameter dot. Dots are easily produced in isolation, allowing dispersed-dot dithering to be exploited to its fullest. Since the Memjet printhead is page-width and operates with a constant paper velocity, the four color planes are printed in perfect registration, allowing ideal dot-on-dot printing. Since there is consequently no spatial interaction between color planes, the same dither matrix is used for each color plane.

A page layout may contain a mixture of images, graphics and text. Continuous-tone (contone) images and graphics are reproduced using a stochastic dispersed-dot dither. Unlike a clustered-dot (or amplitude-modulated) dither, a *dispersed-dot* (or frequency-modulated) dither reproduces high spatial frequencies (i.e. image detail) almost to the limits of the dot resolution, while simultaneously reproducing lower spatial frequencies to their full color depth. A *stochastic* dither matrix is carefully designed to be free of objectionable low-frequency patterns when tiled across the image. As such its size typically exceeds the minimum size required to support a number of intensity levels (i.e. $16\times16\times8$ bits for 257 intensity levels). iPrint uses a dither *volume* of size 64x64x3x8 bits. The volume provides an extra degree of freedom during the design of the dither by allowing a dot to change states multiple times through the intensity range (rather than just once as in a conventional dither matrix).

Human contrast sensitivity peaks at a spatial frequency of about 3 cycles per degree of visual field and then falls off logarithmically, decreasing by a factor of 100 and becoming difficult to measure beyond about 40 cycles per degree [2]. At a normal viewing distance of between 400mm and 250mm, this translates roughly to 150-250 cycles per inch (cpi) on the printed page, or 300-500 samples per inch according to Nyquist's theorem. Taking into account the fact that color sensitivity is less acute than grayscale sensitivity, contone resolution beyond about 400 pixels per inch (ppi) is therefore of limited utility, and in fact contributes slightly to color error through the dither.

Black text and graphics are reproduced directly using bi-level black dots, and are therefore not antialiased (i.e. low-pass filtered) before being printed. Text is therefore *supersampled* beyond the perceptual limits discussed above, to produce smooth edges when spatially integrated. Text resolution up to about 1200 dpi continues to contribute to perceived text sharpness (assuming low-diffusion paper, of course).

## 3 Generic Printer Driver

This section describes generic aspects of any host-based printer driver for iPrint.

### 3.1 Graphics and Imaging Model

We assume that the printer driver is closely coupled with the host graphics system, so that the printer driver can provide device-specific handling for different graphics and imaging operations, in particular compositing operations and text operations.

We assume that the host provides support for color management, so that device-independent color can be converted to iPrint-specific CMYK color in a standard way, based on a user-selected iPrint-specific ICC (International Color Consortium) color profile. The color profile is normally selected implicitly by the user when the user specifies the output medium in the printer (i.e. plain paper, coated paper, transparency, etc.). The page description sent to the printer always contains *device-specific* CMYK color.

We assume that the host graphics system renders images and graphics to a nominal resolution specified by the printer driver, but that it allows the printer driver to take control of rendering text. In particular, the graphics system provides sufficient information to the printer driver to allow it to *render and position* text at a higher resolution than the nominal device resolution.

We assume that the host graphics system requires random access to a contone page buffer at the nominal device resolution, into which it composites graphics and imaging objects, but that it allows the printer driver to take control of the actual compositing - i.e. it expects the printer driver to *manage* the page buffer.

### 3.2 Two-Layer Page Buffer

The printer's page description contains a 267 ppi contone layer and an 800 dpi black layer. The black layer is conceptually *above* the contone layer, i.e. the black layer is composited *over* the contone layer by the printer. The printer driver therefore maintains a page buffer 260 which correspondingly contains a medium-resolution contone layer 261 and a high-resolution black layer 262.

The graphics systems renders and composites objects into the page buffer bottom-up - i.e. later objects obscure earlier objects. This works naturally when there is a single layer, but not when there are two layers which will be composited later. It is therefore necessary to detect when an object being placed on the contone layer obscures something on the black layer.

When obscuration is detected, the obscured black pixels are composited with the contone layer and removed from the black layer. The obscuring object is then laid down on the contone layer, possibly interacting with the black pixels in some way. If the compositing mode of the obscuring object is such that no interaction with the background is possible, then the black pixels can simply be discarded without being composited with the contone layer. In practice, of course, there is little interaction between the contone layer and the black layer.

The printer driver specifies a nominal page resolution of 267 ppi to the graphics system. Where possible the printer driver relies on the graphics system to render image and graphics objects to the pixel level at 267 ppi, with the exception of *black* text. The printer driver fields all text rendering requests, detects and renders black text at 800 dpi, but returns non-black text rendering requests to the graphics system for rendering at 267 ppi.

Ideally the graphics system and the printer driver manipulate color in device-independent RGB, deferring conversion to device-specific CMYK until the page is complete and ready to be sent to the printer. This reduces page buffer requirements and makes compositing more rational. Compositing in CMYK color space is not ideal.

Ultimately the graphics system asks the printer driver to composite each rendered object into the printer driver's page buffer. Each such object uses 24-bit contone RGB, and has an explicit (or implicitly opaque) opacity channel.

The printer driver maintains the two-layer page buffer 260 in three parts. The first part is the medium-resolution (267 ppi) contone layer 261. This consists of a 24-bit RGB bitmap. The second part is a medium-resolution black layer 263. This consists of an 8-bit opacity bitmap. The third part is a high-resolution (800 dpi) black layer 262. This consists of a 1-bit opacity bitmap. The medium-resolution black layer is a subsampled version of the high-resolution opacity layer. In practice, assuming the medium resolution is an integer factor n of the high resolution (e.g. n = 800 / 267 = 3), each medium-resolution opacity value is obtained by averaging the corresponding n × n high-resolution opacity values. This corresponds to box-filtered subsampling. The subsampling of the black pixels effectively antialiases edges in the high-resolution black layer, thereby reducing ringing artefacts when the contone layer is subsequently JPEG-compressed and decompressed.

### 3.3 Compositing Model

For the purposes of discussing the page buffer compositing model, we define the following variables.

| TABLE 1 Compositing variables | | | |
|---|---|---|---|
| **variable** | **description** | **resolution** | **format** |
| $n$ | medium to high resolution scale factor | - | - |
| $C_{BgM}$ | background contone layer color | medium | 8-bit color component |
| $C_{ObM}$ | contone object color | medium | 8-bit color component |
| $á_{ObM}$ | contone object opacity | medium | 8-bit opacity |
| $á_{FgM}$ | medium-resolution foreground black layer opacity | medium | 8-bit opacity |
| $á_{FgH}$ | foreground black layer opacity | high | 1-bit opacity |
| $á_{TxH}$ | black object opacity | high | 1-bit opacity |

When a black object of opacity $á_{TxH}$ is composited with the black layer, the black layer is updated as follows:

$$a_{FgH}[x, y] \leftarrow a_{FgH}[x, y] \vee a_{TxH}[x, y] \qquad \text{(Rule 1)}$$

$$a_{FgM}[x, y] \leftarrow \frac{1}{n^2} \sum_{i=0}^{n-1} \sum_{j=0}^{n-1} 255\, a_{FgH}[nx + i, ny + j] \qquad \text{(Rule 2)}$$

The object opacity is simply ored with the black layer opacity (Rule 1), and the corresponding part of the medium-resolution black layer is re-computed from the high-resolution black layer (Rule 2).

When a contone object of color $C_{ObM}$ and opacity $\alpha_{ObM}$ is composited with the contone layer, the contone layer and the black layer are updated as follows:

$$C_{BgM}[x, y] \leftarrow C_{BgM}[x, y](1 - \alpha_{FgM}[x, y]) \quad \text{if} \quad \alpha_{ObM}[x, y] > 0 \qquad \text{(Rule 3)}$$

$$\alpha_{FgM}[x, y] \leftarrow 0 \quad \text{if} \quad \alpha_{ObM}[x, y] > 0 \qquad \text{(Rule 4)}$$

$$\alpha_{FgH}[x, y] \leftarrow 0 \quad \text{if} \quad \alpha_{ObM}[x / n, y / n] > 0 \qquad \text{(Rule 5)}$$

$$C_{BgM}[x, y] \leftarrow C_{BgM}[x, y](1 - \alpha_{ObM}[x, y]) + C_{ObM}[x, y]\alpha_{ObM}[x, y] \qquad \text{(Rule 6)}$$

Wherever the contone object obscures the black layer, even if not fully opaquely, the affected black layer pixels are *pushed* from the black layer to the contone layer, i.e. composited with the contone layer (Rule 3) and removed from the black layer (Rule 4 and Rule 5). The contone object is then composited with the contone layer (Rule 6).

If a contone object pixel is fully opaque (i.e. $\alpha_{ObM}[x, y]$ = 255), then there is no need to push the corresponding black pixels into the background contone layer (Rule 3), since the background contone pixel will subsequently be completely obliterated by the foreground contone pixel (Rule 6).

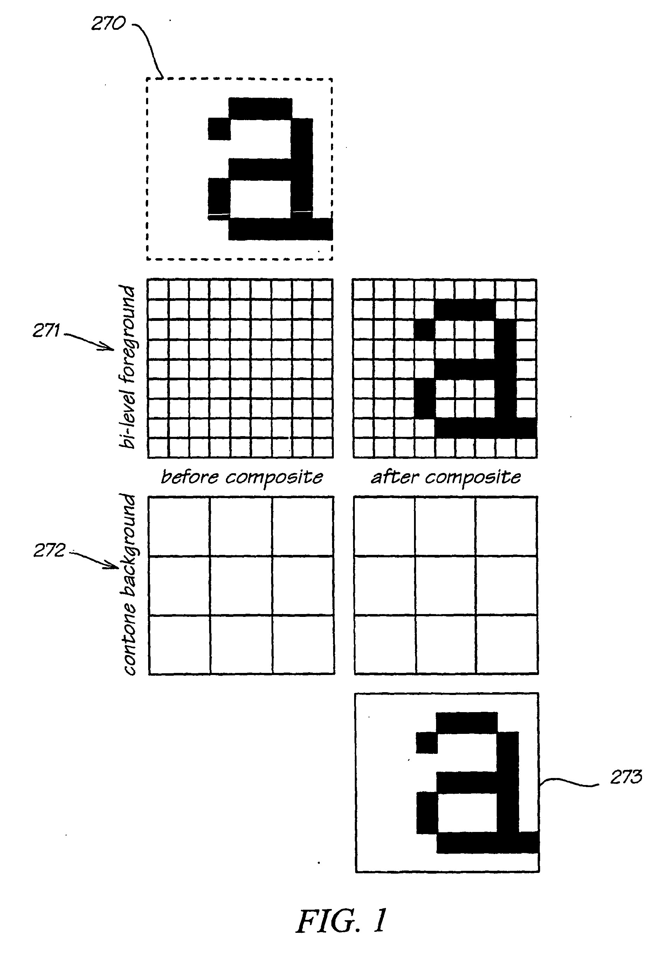

Figures 1 to 5 illustrate the effect on the foreground black layer and the background contone layer of compositing objects of various types onto the image represented by the two layers. In each case the state of the two layers is shown before and after the object is composited. The different resolutions of the foreground and background layers are indicated by the layers' different pixel grid densities.

The output image represented to the two layers is shown without a pixel grid, since the actual rendering of the image is not the focus of discussion here.

The medium-resolution foreground black layer is not illustrated, but is implicitly present. Whenever Rule 1 is applied to the high-resolution foreground black layer, Rule 2 is implicitly applied to the medium-resolution foreground black layer. Whenever Rule 4 is applied, Rule 5 is also implicitly applied.

Figure 1 illustrates the effect of compositing a black object 270 onto a white image. The black object is simply composited into the foreground black layer 271 (Rule 1). The background contone layer 272 is unaffected, and the output image 273 is the black object.

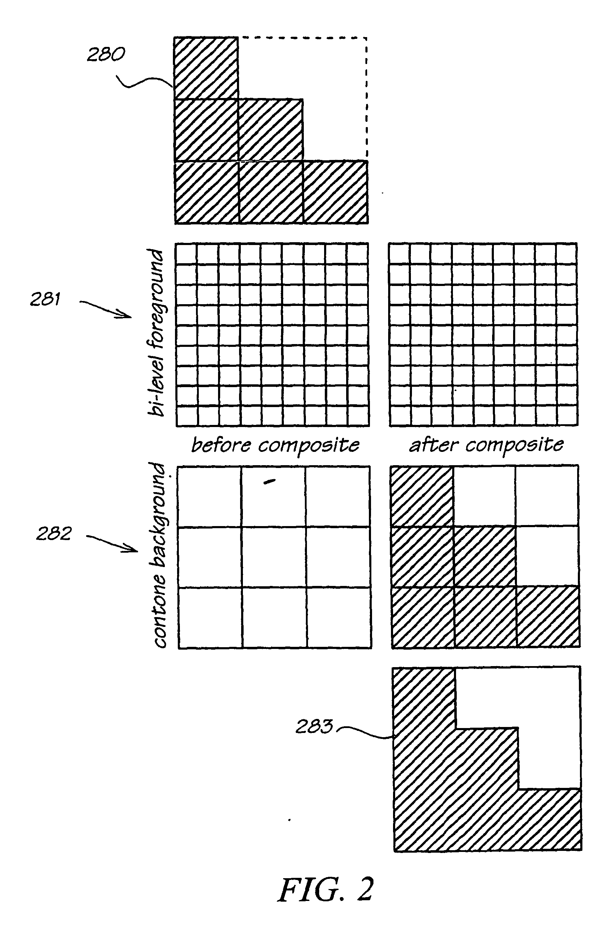

Figure 2 illustrates the effect of compositing a contone object 280 onto a white image. The contone object 280 is simply composited into the background contone layer 282 (Rule 6). The foreground black layer 281 is unaffected, and the output image 283 is the contone object.

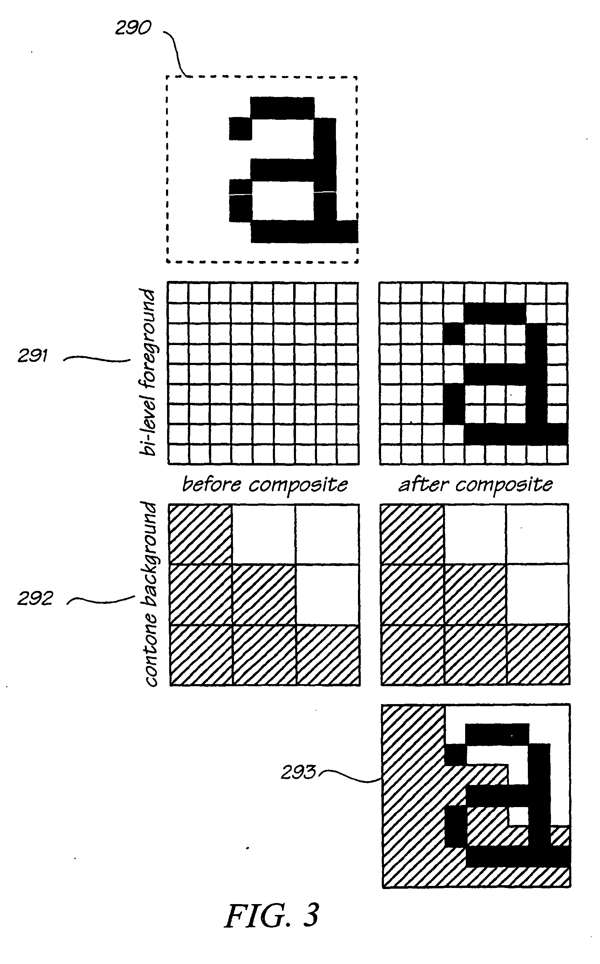

Figure 3 illustrates the effect of compositing a black object 290 onto an image already containing a contone object 292. Again the black object is simply composited into the foreground black layer 291 (Rule 1). The background contone layer is unaffected, and the output image 293 has the black object 290 over the contone object 292.

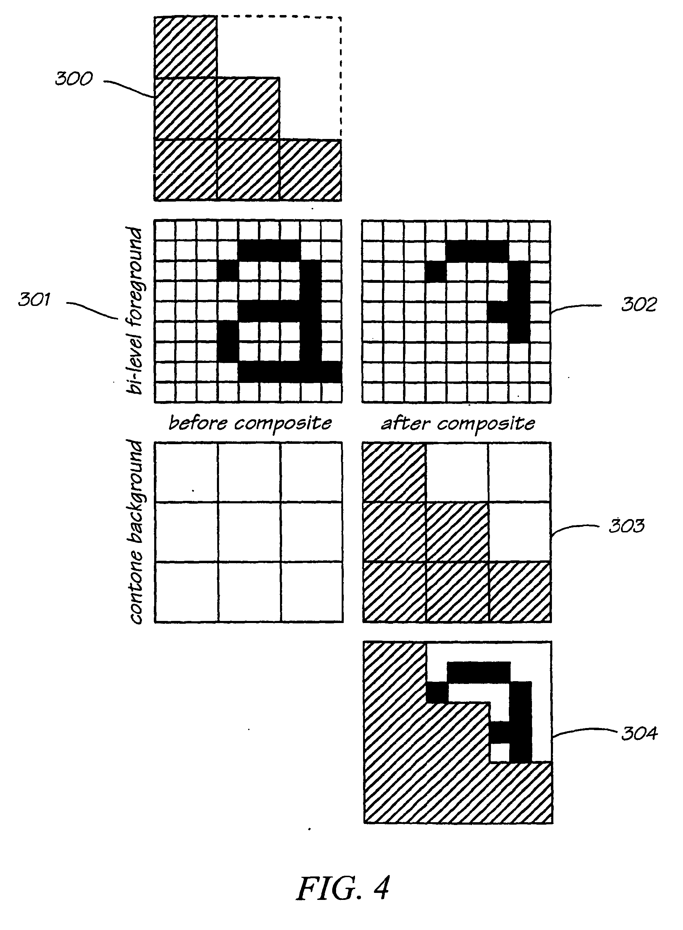

Figure 4 illustrates the effect of compositing an opaque contone object 300 onto an image already containing a black object 301. Since the contone object obscures part of the existing black object, the affected parts of the existing bi-level object are removed from the foreground black layer 302 (Rule 4). There is no need to composite the affected parts into the contone layer because the contone object is fully opaque, and Rule 3 is therefore skipped. The contone object is composited into the background contone layer as usual 303 (Rule 6), and the output image 304 shows the contone object 300 over, and obscuring, the black object.

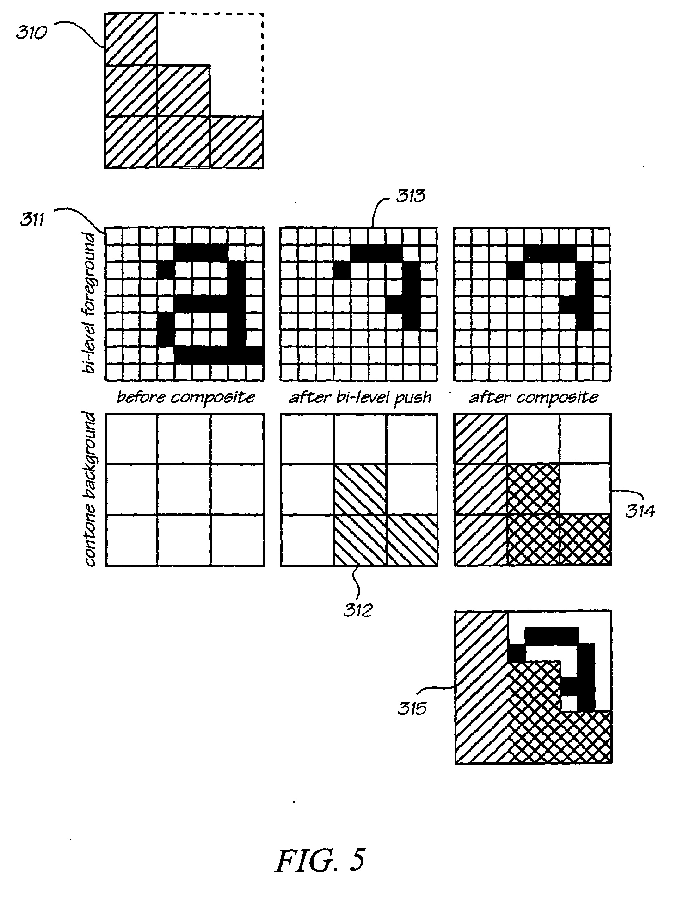

Figure 5. illustrates the effect of compositing a partially transparent contone object 310 onto an image already containing a black object 311. Since the contone object obscures part of the existing black object partially transparently, the affected parts of the black object are composited into the contone layer 312 (Rule 3), and are then removed from the foreground black layer 313 (Rule 4). The contone object is then composited into the background contone layer as usual 314 (Rule 6).

The final image 315 shows darkening of those contone pixels which transparently obscure parts of the existing black object.

### 3.4 Page Compression and Delivery

Once page rendering is complete, the printer driver converts the contone layer to iPrint-specific CMYK with the help of color management functions in the graphics system.

The printer driver then compresses and packages the black layer and the contone layer into an iPrint page description.

iPrint reproduces black at full dot resolution (1600 dpi), but reproduces contone color at a somewhat lower resolution using halftoning. The page description is therefore divided into a black layer and a contone layer. The black layer is defined to composite over the contone layer.

The black layer consists of a bitmap containing a 1-bit *opacity* for each pixel. This black layer *matte* has a resolution which is an integer factor of the printer's dot resolution. The highest supported resolution is 1600 dpi, i. e. the printer's full dot resolution.

The contone layer consists of a bitmap containing a 32-bit CMYK *color* for each pixel. This contone image has a resolution which is an integer factor of the printer's dot resolution. The highest supported resolution is 267 ppi, i. e. one-sixth the printer's dot resolution.

The contone resolution is also typically an integer factor of the black resolution, to simplify calculations in the printer driver. This is not a requirement, however.

The black layer and the contone layer are both in compressed form for efficient transmission over the low-speed USB connection to the printer. This page description is delivered to the printer via the standard spooler.

Note that the black layer is manipulated as a set of 1-bit opacity values, but is delivered to the printer as a set of 1-bit black values. Although these two interpretations are different, they share the same representation, and so no data conversion is required.

### 4 Windows 9X/NT Printer Driver

### 4.1 Windows 9x/NT Printing System

In the Windows 9x/NT printing system [8][9], a printer 320 is a *graphics device*, and an application 321 communicates with it via the *graphics device interface* 322 (GDI). The printer driver *graphics DLL* 323 (dynamic link library) implements the device-dependent aspects of the various graphics functions provided by GDI.

The *spooler* 333 handles the delivery of pages to the printer, and may reside on a different machine to the application requesting printing. It delivers pages to the printer via a *port monitor* 334 which handles the physical connection to the printer. The optional *language monitor* 335 is the part of the printer driver which imposes additional protocol communication with the printer, and in particular decodes status responses from the printer on behalf of the spooler.

The printer driver *user interface DLL* 336 implements the user interface for editing printer-specific properties and reporting printer-specific events.

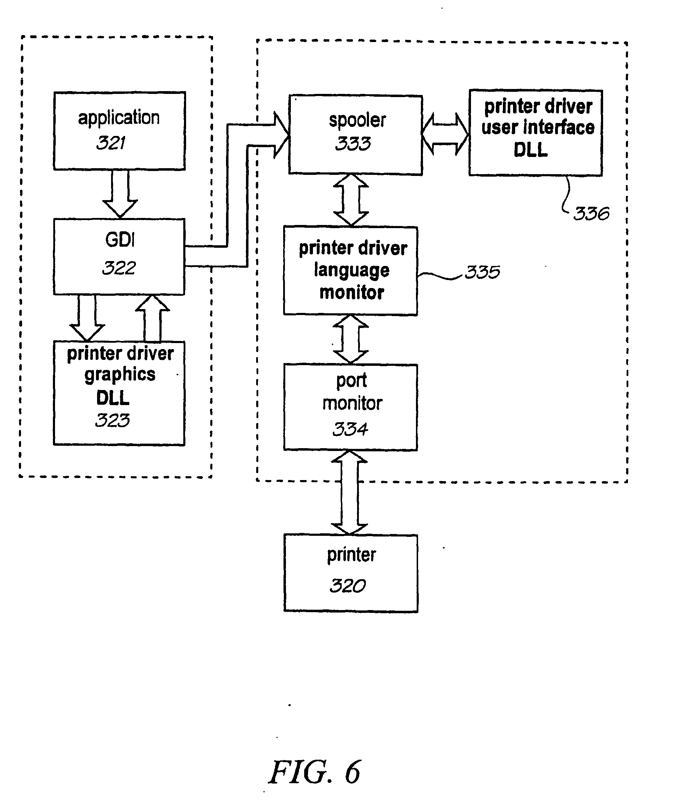

The structure of the Windows 9x/NT printing system is illustrated in Figure 6.

Since iPrint uses USB IEEE-1284 emulation, there is no need to implement a language monitor for iPrint.

The remainder of this section describes the design of the printer driver graphics DLL. It should be read in conjunction with the appropriate Windows 9x/NT DDK documentation [8][9].

### 4.2 Windows 9x/NT Graphics Device Interface (GDI)

GDI provides functions which allow an application to draw on a device *surface*, i.e. typically an abstraction of a display screen or a printed page. For a raster device, the device surface is conceptually a color bitmap. The application can draw on the surface in a device-independent way, i.e. independently of the resolution and color characteristics of the device.

The application has random access to the entire device surface. This means that if a memory-limited printer device requires banded output, then GDI must buffer the entire page's GDI commands and replay them windowed into each band in turn. Although this provides the application with great flexibility, it can adversely affect performance.

GDI supports color management, whereby device-independent colors provided by the application are transparently translated into device-dependent colors according to a standard ICC (International Color Consortium) color profile of the device. A printer driver can activate a different color profile depending, for example, on the user's selection of paper type on the driver-managed printer property sheet.

GDI supports line and spline outline graphics (paths), images, and text. Outline graphics, including outline font glyphs, can be stroked and filled with bit-mapped brush patterns. Graphics and images can be geometrically transformed and composited with the contents of the device surface. While Windows 95/NT4 provides only boolean compositing operators, Windows 98/NT5 provides proper alpha-blending [9].

**4.3 Printer Driver Graphics DLL**

A raster printer can, in theory, utilize standard printer driver components under Windows 9x/NT, and this can make the job of developing a printer driver trivial. This relies on being able to model the device surface as a single bitmap. The problem with this is that text and images must be rendered at the same resolution. This either compromises text resolution, or generates too much output data compromising performance.

As described earlier, iPrint's approach is to render black text and images at different resolutions, to optimize the reproduction of each. The printer driver is therefore implemented according to the generic design described in Section 3.

The driver therefore maintains a two-layer three-part page buffer as described in Section 3.2 and this means that the printer driver must take over managing the device surface, which in turn means that it must mediate all GDI access to the device surface.

**4.3.1 Managing the Device Surface**

The printer driver must support a number of standard functions, including the following:

| TABLE 2 Standard graphics driver interface functions | |
|---|---|
| function | description |
| DrvEnableDriver | Initial entry point into the driver graphics DLL. Returns addresses of functions supported by the driver |
| DrvEnablePDEV | Creates a logical representation of a physical device with which the driver can associate a drawing surface. |
| DrvEnableSurface | Creates a surface to be drawn on, associated with a given PDEV. |

DrvEnablePDEV indicates to GDI, via the flGraphicsCaps member of the returned DEVINFO structure, the graphic rendering capabilities of the driver. This is discussed further below.

DrvEnableSurface creates a device surface consisting of two conceptual layers and three parts: the 267 ppi contone layer 24-bit RGB color, the 267 ppi black layer 8-bit opacity, and the 800 dpi black layer 1-bit opacity. The *virtual* device surface which encapsulates these two layers has a nominal resolution of 267 ppi, so this is the resolution at which GDI operations take place.

Although the aggregate page buffer requires about 33MB of memory, the PC 99 office standard [5] specifies a minimum of 64MB.

In practice, managing the device surface and mediating GDI access to it means that the printer driver must support the following additional functions:

| TABLE 3 Required graphics driver functions for a device-managed surface | |
|---|---|
| function | description |
| DrvCopyBits | Translates between device-managed raster surfaces and GDI-managed standard-format bitmaps. |
| DrvStrokePath | Strokes a path. |
| DrvPaint | Paints a specified region. |
| DrvTextOut | Renders a set of glyphs at specified positions. |

Copying images, stroking paths and filling regions all occur on the contone layer, while rendering solid black text occurs on the bi-level black layer. Furthermore, rendering non-black text also occurs on the contone layer, since it isn't supported on the black layer. Conversely, stroking or filling with solid black can occur on the black layer (if we so choose).

Although the printer driver is obliged to *hook* the aforementioned functions, it can punt function calls which apply to the contone layer back to the corresponding GDI implementations of the functions, since the contone layer is a standard-format bitmap. For every DrvXxx function there is a corresponding EngXxx function provided by GDI.

As described in Section 3.2 , when an object destined for the contone layer obscures pixels on the black layer, the obscured black pixels must be transferred from the black layer to the contone layer before the contone object is composited with the contone layer. The key to this process working is that obscuration is detected and handled in the hooked call, *before* it is punted back to GDI. This involves determining the pixel-by-pixel opacity of the contone object from its geometry, and using this opacity to selectively transfer black pixels from the black layer to the contone layer as described in Section 3.2.

### 4.3.2 Determining Contone Object Geometry

It is possible to determine the geometry of each contone object before it is rendered and thus determine efficiently which black pixels it obscures. In the case of DrvCopyBits and DrvPaint, the geometry is determined by a clip object (CLIPOBJ), which can be enumerated as a set of rectangles.

In the case of DrvStrokePath, things are more complicated. DrvStrokePath supports both straight-line and Bézier-spline curve segments, and single-pixel-wide lines and geometric-wide lines. The first step is to avoid the complexity of Bézier-spline curve segments and geometric-wide lines altogether by clearing the corresponding capability flags (GCAPS_BEZIERS and GCAPS_GEOMETRICWIDE) in the flGraphicsCaps member of the driver's DEVINFO structure. This causes GDI to reformulate such calls as sets of simpler calls to DrvPaint. In general, GDI gives a driver the opportunity to accelerate high-level capabilities, but *simulates* any capabilities not provided by the driver.

What remains is simply to determine the geometry of a single-pixel-wide straight line. Such a line can be solid or *cosmetic*. In the latter case, the line style is determined by a styling array in the specified line attributes (LINEATTRS). The styling array specifies how the line alternates between being opaque and transparent along its length, and so supports various dashed line effects etc.

When the brush is solid black, straight lines can also usefully be rendered to the black layer, though with the increased width implied by the 800 dpi resolution.

### 4.3.3 Rendering Text

In the case of a DrvTextOut, things are also more complicated. Firstly, the opaque background, if any, is handled like any other fill on the contone layer (see DrvPaint). If the foreground brush is not black, or the mix mode is not effectively opaque, or the font is not scalable, or the font indicates outline stroking, then the call is punted to EngTextOut, to be applied to the contone layer. Before the call is punted, however, the driver determines the geometry of each glyph by obtaining its bitmap (via FONTOBJ_cGetGlyphs), and makes the usual obscuration check against the black layer.

If punting a DrvTextOut call is not allowed (the documentation is ambiguous), then the driver should disallow complex text operations. This includes disallowing outline stroking (by clearing the GCAPS_VECTOR_FONT capability flag), and disallowing complex mix modes (by clearing the GCAPS_ARBMIXTXT capability flag).

If the foreground brush is black and opaque, and the font is scalable and not stroked, then the glyphs are rendered on the black layer. In this case the driver determines the geometry of each glyph by obtaining its *outline* (again via FONTOBJ_cGetGlyphs, but as a PATHOBJ). The driver then renders each glyph from its outline at 800 dpi and writes it to the black layer. Although the outline geometry uses device coordinates (i.e. at 267 ppi), the coordinates are in fixed point format with plenty of fractional precision for higher-resolution rendering.

Note that strikethrough and underline rectangles are added to the glyph geometry, if specified.

The driver must set the GCAPS_HIGHRESTEXT flag in the DEVINFO to request that glyph positions (again in 267 ppi device coordinates) be supplied by GDI in high-precision fixed-point format, to allow accurate positioning at 800 dpi. The driver must also provide an implementation of the DrvGetGlyphMode function, so that it can indicate to GDI that glyphs should be cached as outlines rather than bitmaps. Ideally the driver should cache rendered glyph bitmaps for efficiency, memory allowing. Only glyphs below a certain point size should be cached.

### 4.3.4 Compressing the Contone Layer

As described earlier, the contone layer is compressed using JPEG. The forward discrete cosine transform (DCT) is the costliest part of JPEG compression. In current high-quality software implementations, the forward DCT of each $8 \times 8$ block requires 12 integer multiplications and 32 integer additions [7]. On a Pentium processor, an integer multiplication requires 10 cycles, and an integer addition requires 2 cycles [11]. This equates to a total cost per block of 184 cycles.

The 25.5MB contone layer consists of 417,588 JPEG blocks, giving an overall forward DCT cost of about 77Mcycles. At 300MHz, the PC 99 desktop standard [5], this equates to 0.26 seconds, which is well within the 2 second limit per page.

**5 References**

[1] ANSI/EIA 538-1988, Facsimile Coding Schemes and Coding Control Functions for Group 4 Facsimile Equipment, August 1988

[2] Humphreys, G.W., and V. Bruce, Visual Cognition, Lawrence Erlbaum Associates, 1989, p.15

[3] IEEE Std 1284-1994, *IEEE Standard Signaling Method for a Bidirectional Parallel Peripheral Interface for Personal Computers*, 2 December 1994

[4] Intel Corp. and Microsoft Corp., *PC 98 System Design Guide*, 1997

[5] Intel Corp. and Microsoft Corp., *PC 99 System Design Guide*, 1998

[6] ISO/IEC 19018-1:1994, *Information technology - Digital compression and coding of continuous-tone still images: Requirements and guidelines*, 1994

[7] Loeffler, C., A. Ligtenberg and G. Moschytz, "Practical Fast 1-D DCT Algorithms with 11 Multiplications", Proceedings of the International Conference on Acoustics, Speech, and Signal Processing 1989 (ICASSP '89), pp. 988-991

[8] Microsoft Corp., *Microsoft Windows NT 4.0 Device Driver Kit*, 1997

[9] Microsoft Corp., *Microsoft Windows NT 5.0 Device Driver Kit*, 1998

[10] Olsen, J. "Smoothing Enlarged Monochrome Images", in Glassner, A.S. (ed.), Graphics Gems, AP Professional, 1990

[11] Schmit, M.L., Pentium Processor Optimization Tools, AP Professional, 1995

[12] Thompson, H.S., Multilingual Corpus 1 CD-ROM, European Corpus Initiative

[13] Urban, S.J., "Review of standards for electronic imaging for facsimile systems", Journal of Electronic Imaging, Vol.1(1), January 1992, pp.5-21

[14] USB Implementers Forum, *Universal Serial Bus Specification*, Revision 1.0, 1996

[15] USB Implementers Forum, *Universal Serial Bus Device Class Definition for Printer Devices*, Version 1.07 Draft, 1998

[16] Wallace, G.K., "The JPEG Still Picture Compression Standard", Communications of the ACM, April 1991, pp. 30-44

[17] Yasuda, Y., "Overview of Digital Facsimile Coding Techniques in Japan", Proceedings of the IEE, Vol 68(7), July 1980, pp.830-845

It will be appreciated by persons skilled in the art that numerous variations and/or modifications may be made to the invention as shown in the specific embodiments without departing from scope of the invention as broadly described. The present embodiments are, therefore, to be considered in all respects as illustrative and not restrictive.

**Claims**

1. A printer driver for a printer; said printer driver managing a two layer buffer which represents a page to be printed; the first layer of said buffer containing background contone data; the second layer of said buffer containing foreground bi-level data; said printer driver transmitting data from said buffer to said printer; said printer compositing data from said layers of said buffer; said printer driver operating such that when it determines that contone data being composited with said contone layer obscures data in said bi-level layer, said obscured bi-level data is removed from said bi-level layer and is either discarded, or in the case where there is some interaction between the image represented by said obscuring contone data and the image represented by said obscured bi-level data then said obscured bi-level data is composited with said contone layer before said obscuring contone data is composited with said contone layer.

2. A printer driver according to claim 1, where said contone layer has a lower resolution than said bi-level layer.

3. A printer driver for a printer; said printer driver managing a three layer buffer which represents a page to be printed; the first layer of said buffer containing background contone data; the second layer of said buffer containing foreground bi-level data; the third layer containing a contone version of the bi-level data of said second layer subsampled at the resolution of said first layer; said printer driver transmitting data from said buffer to said printer; said printer compositing data from said layers of said buffer; said printer driver operating such that when it determines that contone data being composited with said first layer obscures contone data in said third layer, said obscured contone data is removed from said third layer and is either discarded, or in the case where there is some interaction between the image represented by said obscuring contone data and the image represented by said obscured contone data then said obscured contone data is composited with said first layer before said obscuring contone data is composited with said first layer, and bi-level data in said second layer which corresponds to said obscured contone data in said third layer is removed from said second layer, where said first layer containing background contone data has a lower resolution than said second layer containing foreground bi-level data.

4. A printer driver according to claim 1, where said interaction occurs between an image represented by said obscuring contone data and said obscured bi-level data when said contone data represents a non-opaque image object.

5. A printer driver according to claim 1, where said contone layer data is color data, and said bi-level layer data is black data.

6. A printer driver according to claim 5, where the following rules are implemented by said printer driver:

when a black image object is composited with said page buffer, it is composited with said bi-level black layer;
when a contone color image object is composited with said page buffer, it is composited with said contone color layer;
wherever said contone image object obscures said black layer, even if not fully opaquely, obscured black layer pixels are composited with said contone layer, and removed from said black layer, before said contone object is composited with said contone layer;
if a pixel of said contone object is fully opaque, then there is no need to composite corresponding pixels in said black layer with said contone layer, since the corresponding pixel in said contone layer will be completely replaced by said contone object pixel.

7. A printer driver according to claim 2, where said bi-level layer data is transmitted to said printer in compressed form.

8. A printer driver according to claim 7, where Group 4 facsimile coding is used for said bi-level compression, with the modified Huffman coding of horizontal run lengths removed, tuned for higher resolutions, or used as normal.

9. A printer driver according to claim 7, where EDRL compression is used for said bi-level compression.

10. A printer driver according to claim 2, where said contone layer data is transmitted to said printer in compressed form.

11. A printer driver according to claim 10, where JPEG compression or wavelet compression is used for said contone compression.

12. A method of managing, in a printer driver for a printer, a two layer buffer which represents a page to be printed; the first layer of said buffer containing background contone data ; the second layer of said buffer containing foreground bi-level data; said printer driver transmitting data from said buffer to said printer; said printer compositing data from said layers of said buffer; the method comprising the following steps: operating said printer driver to determine whether contone data being composited with said contone layer obscures data in said bi-level layer: removing said obscured bi-level data from said bi-level layer; and either discarding said obscured bi-level data, or in the case where there is some interaction between the image represented by said obscuring contone data and the image represented by said obscured bi-level data, compositing said obscured bi-level data with said contone layer before compositing said obscuring contone data with said contone layer.

13. A method according to claim 12, where said contone layer has a lower resolution than said bi-level layer.

14. A method of managing, in a printer driver for a printer, a three layer buffer which represents a page to be printed; the first layer of said buffer containing background contone data; the second layer of said buffer containing foreground bi-level data, the third layer containing a contone version of the bi-level data of said second layer subsampled at the resolution of said first layer; said printer driver transmitting data from said buffer to said printer; said printer compositing data from said layers of said buffer; the method comprising the following steps:

operating said printer driver to determine whether contone data being composited with said first layer obscures data in said third layer;
removing said obscured contone data from said third layer;
either discarding said obscured contone data, or in the case where there is some interaction between the image represented by said obscuring contone data and the image represented by said obscured contone data then compositing said obscured contone data with said first layer before compositing said obscuring contone data with said first layer; and

removing from said second layer bi-level data which corresponds to said obscured contone data in said third layer;

wherein the first layer containing background contone data has a lower resolution than the second layer containing foreground bi-level data.

15. A method according to claim 12, where said interaction occurs between an image represented by said obscuring contone data and said obscured bi-level data where said contone data represents a non-opaque image object.

16. A method according to claim 12, where said contone layer data is color data, and said bi-level layer data is black data.

17. A method according to claim 16, where the following rules are implemented by said printer driver:

when a black image object is composited with said page buffer, it is composited with said bi-level black layer;
when a contone color image object is composited with said page buffer, it is composited with said contone color layer;
wherever said contone image object obscures said black layer, even if not fully opaquely, obscured black layer pixels are composited with said contone layer, and removed from said black layer, before said contone object is composited with said contone layer;
if a pixel of said contone object is fully opaque, then there is no need to composite corresponding pixels in said black layer with said contone layer, since the corresponding pixel in said contone layer will be completely replaced by said contone object pixel.

**Patentansprüche**

1. Druckertreiber für einen Drucker; wobei der Druckertreiber einen Zwei-Schichten-Puffer verwaltet, der eine zu druckende Seite repräsentiert; wobei die erste Schicht des Puffers Hintergrund-Volltondaten enthält; die zweite Schicht des Puffers Vordergrund-Binärdaten enthält; der Druckertreiber Daten aus dem Puffer an den Drucker überträgt; der Drucker Daten aus den Schichten des Puffers zusammenfasst; der Druckertreiber so funktioniert, dass er feststellt, ob durch Zusammenfassen von Volltondaten mit der Volltonschicht Daten in der Binärschicht verdeckt werden, worauf dann die verdeckten Binärdaten aus der Binärschicht entfernt und entweder verworfen werden oder, falls es zwischen dem Bild, das durch die verdeckenden Volltondaten repräsentiert wird, und dem Bild, das durch die verdeckten Binärdaten repräsentiert wird, zu einer Interaktion kommt, zuerst die verdeckten Binärdaten mit der Volltonschicht zusammengefasst werden, bevor die verdeckenden Volltondaten mit der Volltonschicht zusammengefasst werden.

2. Druckertreiber nach Anspruch 1, wobei die Volltonschicht eine niedrigere Auflösung als die Binärschicht aufweist.

3. Druckertreiber für einen Drucker; wobei der Druckertreiber einen Drei-Schichten-Puffer verwaltet, der eine zu druckende Seite repräsentiert; wobei die erste Schicht des Puffers Hintergrund-Volltondaten enthält; die zweite Schicht des Puffers Vordergrund-Binärdaten enthält; die dritte Schicht eine Volltonversion der Binärdaten der zweiten Schicht enthält, die mit der gleichen Auflösung wie die erste Schicht einem Subsampling unterzogen werden; der Druckertreiber Daten aus dem Puffer an den Drucker überträgt; der Drucker Daten aus den Schichten des Puffers zusammenfasst; der Druckertreiber so funktioniert, dass er feststellt, ob durch Zusammenfassen von Volltondaten mit der ersten Schicht Volltondaten in der dritten Schicht verdeckt werden, worauf dann die verdeckten Volltondaten aus der dritten Schicht entfernt und entweder verworfen werden oder, falls es zwischen dem Bild, das durch die verdeckenden Volltondaten repräsentiert wird, und dem Bild, das durch die verdeckten Volltondaten repräsentiert wird, zu einer Interaktion kommt, zuerst die verdeckten Volltondaten mit der ersten Schicht zusammengefasst werden, bevor die verdeckenden Volltondaten mit der ersten Schicht zusammengefasst werden, und die Binärdaten in der zweiten Schicht, die den verdeckten Volltondaten in der dritten Schicht entsprechen, aus der zweiten Schicht entfernt werden, wobei die Hintergrund-Volltondaten enthaltende erste Schicht eine niedrigere Auflösung als die Vordergrund-Binärdaten enthaltende zweite Schicht aufweist.

4. Druckertreiber nach Anspruch 1, wobei die Interaktion zwischen einem durch die verdeckenden Volltondaten und einem durch die verdeckten Binärdaten repräsentierten Bild stattfindet, wenn die Volltondaten ein nicht deckendes Bildobjekt repräsentieren.

5. Druckertreiber nach Anspruch 1, wobei die Volltonschichtdaten Farbdaten sind und die Binärschichtdaten Schwarzdaten sind.

6. Druckertreiber nach Anspruch 5, wobei die folgenden Regeln durch den Druckertreiber implementiert sind:

Wird ein Schwarz-Bildobjekt mit dem Seitenpuffer zusammengefasst, so wird es mit der Binär-Schwarzschicht zusammengefasst;

wird ein Vollton-Farbbildobjekt mit dem Seitenpuffer zusammengefasst, so wird es mit der Vollton-Farbschicht zusammengefasst;

überall dort, wo das Vollton-Bildobjekt die Schwarzschicht verdeckt, auch wenn es nicht vollkommen deckend ist, werden die verdeckten Schwarzschichtpixel mit der Volltonschicht zusammengefasst und aus der Schwarzschicht entfernt, bevor das Volltonobjekt mit der Volltonschicht zusammengefasst wird;

wenn ein Pixel des Volltonobjekts vollkommen deckend ist, besteht keine Notwendigkeit, die entsprechenden Pixel in der Schwarzschicht mit der Volltonschicht zusammenzufassen, da die entsprechenden Pixel in der Volltonschicht durch die Volltonobjektpixel vollständig ersetzt werden.

7. Druckertreiber nach Anspruch 2, wobei die Binärschichtdaten in komprimierter Form an den Drucker übertragen werden.

8. Druckertreiber nach Anspruch 7, wobei für die Binärkompression eine Faksimilekodierung der Gruppe 4 verwendet wird, wobei die modifizierte Huffman-Kodierung horizontaler Lauflängen entfernt, auf höhere Auflösungen abgestimmt oder wie gewohnt verwendet wird.

9. Druckertreiber nach Anspruch 7, wobei eine EDRL-Kompression für die Binärkompression verwendet wird.

10. Druckertreiber nach Anspruch 2, wobei die Volltonschichtdaten in komprimierter Form an den Drucker übertragen werden.

11. Druckertreiber nach Anspruch 10, wobei eine JPEG-Kompression oder Wavelet-Kompression für die Volltonkompression verwendet wird.

12. Verfahren zum Verwalten, in einem Druckertreiber für einen Drucker, eines Zwei-Schichten-Puffers, der eine zu druckende Seite repräsentiert; wobei die erste Schicht des Puffers Hintergrund-Volltondaten enthält; die zweite Schicht des Puffers Vordergrund-Binärdaten enthält; der Druckertreiber Daten aus dem Puffer an den Drucker überträgt; der Drucker Daten aus den Schichten des Puffers zusammenfasst; und das Verfahren die folgenden Schritte umfasst:

Betreiben des Druckertreibers, um festzustellen, ob durch Zusammenfassen von Volltondaten mit der Volltonschicht Daten in der Binärschicht verdeckt werden; Entfernen der verdeckten Binärdaten aus der Binärschicht; und entweder Verwerfen der verdeckten Binärdaten oder, falls es zwischen dem Bild, das durch die verdeckenden Volltondaten repräsentiert wird, und dem Bild, das durch die verdeckten Binärdaten repräsentiert wird, zu einer Interaktion kommt, Zusammenfassen der verdeckten Binärdaten mit der Volltonschicht vor dem Zusammenfassen der verdeckenden Volltondaten mit der Volltonschicht.

13. Verfahren nach Anspruch 12, wobei die Volltonschicht eine niedrigere Auflösung als die Binärschicht aufweist.

14. Verfahren zum Verwalten, in einem Druckertreiber für einen Drucker, eines Drei-Schichten-Puffers, der eine zu druckende Seite repräsentiert; wobei die erste Schicht des Puffers Hintergrund-Volltondaten enthält; die zweite Schicht des Puffers Vordergrund-Binärdaten enthält; die dritte Schicht eine Volltonversion der Binärdaten der zweiten Schicht enthält, die mit der gleichen Auflösung wie die erste Schicht einem Subsampling unterzogen werden; der Druckertreiber Daten aus dem Puffer an den Drucker überträgt; der Drucker Daten aus den Schichten des Puffers zusammenfasst; und das Verfahren die folgenden Schritte umfasst:

Betreiben des Druckertreibers, um festzustellen, ob durch Zusammenfassen von Volltondaten mit der ersten Schicht Daten in der dritten Schicht verdeckt werden;
Entfernen der verdeckten Volltondaten aus der dritten Schicht;

entweder Verwerfen der verdeckten Volltondaten oder, falls es zwischen dem Bild, das durch die verdeckenden Volltondaten repräsentiert wird, und dem Bild, das durch die verdeckten Volltondaten repräsentiert wird, zu einer Interaktion kommt, zuerst Zusammenfassen der verdeckten Volltondaten mit der ersten Schicht, bevor die verdeckenden Volltondaten mit der ersten Schicht zusammengefasst werden;

Entfernen von Binärdaten, die den verdeckten Volltondaten in der dritten Schicht entsprechen, aus der zweiten Schicht;

wobei die Hintergrund-Volltondaten enthaltende erste Schicht eine niedrigere Auflösung als die Vordergrund-Binärdaten enthaltende zweite Schicht aufweist.

**15.** Verfahren nach Anspruch 12, wobei die Interaktion zwischen einem durch die verdeckenden Volltondaten und einem durch die verdeckten Binärdaten repräsentierten Bild stattfindet, wobei die Volltondaten ein nicht deckendes Bildobjekt repräsentieren.

**16.** Verfahren nach Anspruch 12, wobei die Volltonschichtdaten Farbdaten sind und die Binärschichtdaten Schwarzdaten sind.

**17.** Verfahren nach Anspruch 16, wobei die folgenden Regeln durch den Druckertreiber implementiert sind:

Wird ein Schwarz-Bildobjekt mit dem Seitenpuffer zusammengefasst, so wird es mit der Binär-Schwarzschicht zusammengefasst;

wird ein Vollton-Farbbildobjekt mit dem Seitenpuffer zusammengefasst, so wird es mit der Vollton-Farbschicht zusammengefasst;

überall dort, wo das Vollton-Bildobjekt die Schwarzschicht verdeckt, auch wenn es nicht vollkommen deckend ist, werden die verdeckten Schwarzschichtpixel mit der Volltonschicht zusammengefasst und aus der Schwarzschicht entfernt, bevor das Volltonobjekt mit der Volltonschicht zusammengefasst wird;

wenn ein Pixel des Volltonobjekts vollkommen deckend ist, besteht keine Notwendigkeit, die entsprechenden Pixel in der Schwarzschicht mit der Volltonschicht zusammenzufassen, da die entsprechenden Pixel in der Volltonschicht durch die Volltonobjektpixel vollständig ersetzt werden.

**Revendications**

**1.** Pilote d'imprimante pour une imprimante ; ledit pilote d'imprimante gérant un tampon à deux couches qui représente une page à imprimer ; la première couche dudit tampon contenant des données à tons continus de fond ; la seconde couche dudit tampon contenant des données à deux niveaux de premier plan ; ledit pilote d'imprimante transmettant des données dudit tampon à ladite imprimante ; ladite imprimante composant des données à partir desdites couches dudit tampon ; ledit pilote d'imprimante fonctionnant de telle sorte que, lorsqu'il détermine que les données à tons continus composées avec ladite couche à tons continus obscurcissent des données dans ladite couche à deux niveaux, lesdites données à deux niveaux obscurcies sont retirées de ladite couche à deux niveaux et sont soit supprimées, soit, dans le cas où il y a une certaine interaction entre l'image représentée par lesdites données à tons continus obscurcissantes et l'image représentée par lesdites données à deux niveaux obscurcies, alors lesdites données à deux niveaux obscurcies sont composées avec ladite couche à tons continus avant que lesdites données à tons continus obscurcissantes soient composées avec ladite couche à tons continus.

**2.** Pilote d'imprimante selon la revendication 1, dans lequel ladite couche à tons continus a une résolution inférieure à celle de ladite couche à deux niveaux.

**3.** Pilote d'imprimante pour une imprimante ; ledit pilote d'imprimante gérant un tampon à trois couches qui représente une page à imprimer ; la première couche dudit tampon contenant des données à tons continus de fond ; la seconde couche dudit tampon contenant des données à deux niveaux de premier plan ; la troisième couche contenant une version à tons continus des données à deux niveaux de ladite seconde couche sous-échantillonnée à la résolution de ladite première couche ; ledit pilote d'imprimante transmettant des données dudit tampon à ladite imprimante ; ladite imprimante composant des données à partir desdites couches dudit tampon ; ledit pilote d'imprimante fonctionnant de telle sorte que, lorsqu'il détermine que des données à tons continus composées avec ladite première couche obscurcissent des données à tons continus dans ladite troisième couche, lesdites données à tons continus obscurcies sont retirées de ladite troisième couche et sont soit supprimées, soit, dans le cas où il y a une certaine interaction entre l'image représentée par lesdites données à tons continus obscurcissantes et l'image représentée par lesdites données à tons continus obscurcis, alors lesdites données à tons continus obscurcies sont composées avec ladite première couche avant que lesdites données à tons continus obscurcissantes soient composées avec ladite première couche, et des données à deux niveaux dans ladite seconde couche, qui correspondent auxdites données à tons continus obscurcies dans ladite troisième couche sont retirées de ladite seconde couche, ladite première couche contenant des données à tons continus de fond ayant une résolution inférieure à celle de ladite seconde couche contenant des données à deux niveaux de premier plan.

4. Pilote d'imprimante selon la revendication 1, dans lequel ladite interaction se produit entre une image représentée par lesdites données à tons continus obscurcissantes et lesdites données à deux niveaux obscurcies, lorsque ladites données à tons continus représentent un objet d'image non-opaque.

5. Pilote d'imprimante selon la revendication 1, dans lequel lesdites données de couche à tons continus sont des données de couleur, et lesdites données de couche à deux niveaux sont des données de noir.

6. Pilote d'imprimante selon la revendication 5, les règles suivantes étant mises en oeuvre par ledit pilote d'imprimante :

- lorsqu'un objet d'image noir est composé avec ledit tampon de page, il est composé avec ladite couche de noir à deux niveaux ;
- lorsqu'un objet d'image de couleur à tons continus est composé avec ledit tampon de page, il est composé avec ladite couche de couleur à tons continus ;
- à chaque fois que ledit objet d'image à tons continus obscurcit ladite couche de noir, même si ce n'est pas complètement de manière opaque, des pixels de la couche de noir obscurcis sont composés avec ladite couche à tons continus, et retirés de ladite couche de noir, avant que ledit objet à tons continus soit composé avec ladite couche à tons continus ;
- si un pixel dudit objet à tons continus est complètement opaque, alors il n'est pas nécessaire de composer des pixels correspondants dans ladite couche de noir avec ladite couche à tons continus, étant donné que le pixel correspondant dans ladite couche à tons continus sera complètement remplacé par ledit pixel d'objet à tons continus.

7. Pilote d'imprimante selon la revendication 2, dans lequel lesdites données de couche à deux niveaux sont transmises à ladite imprimante sous une forme compressée.

8. Pilote d'imprimante selon la revendication 7, dans lequel un codage de télécopie de Groupe 4 est utilisé pour ladite compression à deux niveaux, avec le codage de Huffman modifié de longueurs de plage horizontal retiré, réglé pour des résolutions supérieures, ou normalement utilisé.

9. Pilote d'imprimante selon la revendication 7, dans lequel une compression EDRL est utilisée pour ladite compression à deux niveaux.

10. Pilote d'imprimante selon la revendication 2, dans lequel lesdites données de couche à tons continus sont transmises à ladite imprimante sous une forme compressée.

11. Pilote d'imprimante selon la revendication 7, dans lequel une compression par JPEG ou par ondelettes est utilisée pour ladite compression à tons continus.

12. Procédé de gestion, dans un pilote d'imprimante pour une imprimante, d'un tampon à deux couches qui représente une page à imprimer ; la première couche dudit tampon contenant des données à tons continus de fond ; la seconde couche dudit tampon contenant des données à deux niveaux de premier plan ; ledit pilote d'imprimante transmettant des données dudit tampon à ladite imprimante ; ladite imprimante composant des données à partir desdites couches dudit tampon ; le procédé comprenant les étapes suivantes consistant à :

- actionner ledit pilote d'imprimante pour déterminer si ou non des données à tons continus composées avec ladite couche à tons continus obscurcissent des données dans ladite couche à deux niveaux ;
- retirer lesdites données à deux niveaux obscurcies de ladite couche à deux niveaux ; et
- soit supprimer lesdites données à deux niveaux obscurcies, soit dans le cas où il y a une certaine interaction entre l'image représentée par lesdites données à tons continus obscurcissantes et l'image représentée par lesdites données à deux niveaux obscurcies, composer lesdites données à deux niveaux obscurcies avec ladite couche à tons continus avant de composer lesdites données à tons continus obscurcissantes avec ladite couche à tons continus.

**13.** Procédé selon la revendication 12, dans lequel ladite couche à tons continus a une résolution inférieure à celle de ladite couche à deux niveaux.

**14.** Procédé de gestion, dans un pilote d'imprimante pour une imprimante, d'un tampon à trois couches qui représente une page à imprimer ; la première couche dudit tampon contenant des données à tons continus de fond ; la seconde couche dudit tampon contenant des données à deux niveaux de premier plan, la troisième couche contenant une version à tons continus des données à deux niveaux de ladite seconde couche sous-échantillonnée à la résolution de ladite première couche ; ledit pilote d'imprimante transmettant des données dudit tampon à ladite imprimante ; ladite imprimante composant des données à partir desdites couches dudit tampon ; le procédé comprenant les étapes suivantes consistant à :

- actionner ledit pilote d'imprimante pour déterminer si ou non des données à tons continus composées avec ladite première couche obscurcissent des données dans ladite troisième couche ;
- retirer lesdites données à tons continus obscurcies de ladite troisième couche ;
- soit supprimer lesdites données à tons continus obscurcies, soit dans le cas où il y a une certaine interaction entre l'image représentée par lesdites données à tons continus obscurcissantes et l'image représentée par lesdites données à tons continus obscurcies, composer lesdites données à tons continus obscurcies avec ladite première couche avant de composer lesdites données à tons continus obscurcissantes avec ladite première couche ; et
- retirer de la seconde couche des données à deux niveaux qui correspondent auxdites données à tons continus obscurcies dans ladite troisième couche ;

la première couche contenant des données à tons continus de fond ayant une résolution inférieure à celle de la seconde couche contenant des données à deux niveaux de premier plan.

**15.** Procédé selon la revendication 12, dans lequel ladite interaction se produit entre une image représentée par lesdites données à tons continus obscurcissantes et lesdites données à deux niveaux obscurcies, lesdites données à tons continus représentant un objet d'image non-opaque.

**16.** Procédé selon la revendication 12, dans lequel lesdites données de couche à tons continus sont des données de couleur, et lesdites données de couche à deux niveaux des données de noir.

**17.** Procédé selon la revendication 16, les règles suivantes étant mises en oeuvre par ledit pilote d'imprimante :

- lorsqu'un objet d'image noir est composé avec ledit tampon de page, il est composé avec ladite couche de noir à deux niveaux ;
- lorsqu'un objet d'image de couleur à tons continus est composé avec ledit tampon de page, il est composé avec ladite couche de couleur à tons continus ;
- à chaque fois que ledit objet d'image à tons continus obscurcit ladite couche de noir, même si ce n'est pas complètement de manière opaque, des pixels de couche de noir obscurcis sont composés avec ladite couche à tons continus, et retirés de ladite couche de noir, avant que ledit objet à tons continus soit composé avec ladite couche à tons continus ; et
- si un pixel dudit objet à tons continus est complètement opaque, alors il n'est pas nécessaire de composer des pixels correspondants à ladite couche de noir avec ladite couche à tons continus, étant donné que le pixel correspondant dans ladite couche à tons continus sera complètement remplacé par ledit pixel d'objet à tons continus.

270

271

bi-level foreground

before composite          after composite

272

contone background

273

*FIG. 1*

**FIG. 2**

290

291

bi-level foreground

before composite

after composite

292

contone background

293

*FIG. 3*

300

301

bi-level foreground

before composite

after composite

302

contone background

303

304

*FIG. 4*

310

311

313

bi-level foreground

before composite    after bi-level push    after composite

contone background

312

314

315

*FIG. 5*

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9535623 A
- US 5774634 A

### Non-patent literature cited in the description

- *Facsimile Coding Schemes and Coding Control Functions for Group 4 Facsimile Equipment,* August 1988
- **HUMPHREYS, G.W. ; V. BRUCE.** Visual Cognition. Lawrence Erlbaum Associates, 1989, 15
- **LOEFFLER, C. ; A. LIGTENBERG ; G. MO-SCHYTZ.** Practical Fast 1-D DCT Algorithms with 11 Multiplications. *Proceedings of the International Conference on Acoustics, Speech, and Signal Processing,* 1989, 988-991
- Smoothing Enlarged Monochrome Images. **OLSEN, J.** Graphics Gems. 1990
- **SCHMIT, M.L.** *Pentium Processor Optimization Tools,* 1995
- **THOMPSON, H.S.** *Multilingual Corpus 1 CD-ROM*
- **URBAN, S.J.** Review of standards for electronic imaging for facsimile systems. *Journal of Electronic Imaging,* January 1992, vol. 1 (1), 5-21
- **WALLACE, G.K.** The JPEG Still Picture Compression Standard. *Communications of the ACM,* April 1991, 30-44
- **YASUDA, Y.** Overview of Digital Facsimile Coding Techniques in Japan. *Proceedings of the IEE,* July 1980, vol. 68 (7), 830-845